(19) Europäisches Patentamt

European Patent Office

Office européen des brevets

(11) **EP 1 378 378 A1**

(12) **DEMANDE DE BREVET EUROPEEN**

(43) Date de publication:
**07.01.2004 Bulletin 2004/02**

(51) Int Cl.7: **B60C 11/24**, B60T 8/00,
G01N 3/56, G01N 19/02

(21) Numéro de dépôt: 03014801.9

(22) Date de dépôt: **30.06.2003**

(84) Etats contractants désignés:
**AT BE BG CH CY CZ DE DK EE ES FI FR GB GR
HU IE IT LI LU MC NL PT RO SE SI SK TR**
Etats d'extension désignés:
**AL LT LV MK**

(30) Priorité: **04.07.2002 FR 0208413**

(71) Demandeurs:
• **Sociéte de Technologie Michelin
63000 Clermont-Ferrand Cedex 09 (FR)**
• **Michelin Recherche et Technique S.A.
1763 Granges-Paccot (CH)**

(72) Inventeurs:
• **Levy, Georges
63000 Clermont-Ferrand (FR)**
• **Fangeat, Nicolas
63400 Chamalieres (FR)**

(74) Mandataire: **Bauvir, Jacques
c/o Services SGD/LG/PI,
F 35,
Ladoux
63040 Clermont-Ferrand Cedex 9 (FR)**

(54) **Estimation de l'usure d'un pneu.**

(57) Méthode de contrôle du fonctionnement d'un pneumatique, consistant à déterminer des estimations ou des mesures du glissement $G_i$ et du coefficient d'adhérence $\mu_i$ existant audit glissement, pour au moins une paire de valeurs ($G_i$, $\mu_i$) ; déterminer les valeurs correspondantes de la pente $\alpha_i$, de la droite passant par l'origine et par ($G_i$, $\mu_i$) ; calculer un coefficient B par calcul direct ou par une régression à partir d'un nombre suffisant de paires avec ($\alpha_i$, $G_i$) de façon à estimer la valeur de $\alpha_0$ à l'origine ; utiliser $\alpha_0$ comme indicateur de la valeur de la rigidité longitudinale de sculpture ; déduire la hauteur résiduelle de sculpture de la valeur de la rigidité longitudinale de sculpture, d'où un indicateur de l'usure du pneumatique.

Mesure μ, G

Calcul de la sécante

Calcul de la régression

Calcul rigidité longitudinale

Estimation usure

Fig. 1

**Description**

La présente invention concerne les pneumatiques, et plus particulièrement l'estimation de l'usure de ceux-ci.

Il peut être intéressant d'être capable, sinon de mesurer de façon précise, au moins d'estimer l'usure des pneumatiques montés sur les véhicules, afin d'alerter le conducteur et/ou de modifier automatiquement les paramètres de systèmes embarqués sur véhicule. Par exemple, il y aurait avantage à ce que l'on puisse ajuster automatiquement en fonction de l'usure des pneumatiques certains paramètres de systèmes anti-bloquage de roue, pour améliorer leurs performances.

L'objectif de la présente invention est de proposer un procédé d'estimation de l'usure des pneumatiques facile à installer notamment sur les véhicule déjà équipés de système d'anti-bloquage de roues (bien connus sous l'appellation « ABS »), ce qui est de plus en plus courant.

L'invention propose une méthode de contrôle du fonctionnement d'un pneu, comprenant les étapes suivantes :

- déterminer des estimations ou des mesures du glissement $G_i$ et du coefficient d'adhérence $\mu_i$ existant audit glissement, pour au moins une paire « i » de valeurs ($G_i$, $\mu_i$);
- déterminer les valeurs correspondantes de la pente $\alpha_i$, de la droite passant par l'origine et par ($G_i$, $\mu_i$);
- calculer un coefficient B par calcul direct ou par une régression à partir d'un nombre suffisant de paires avec ($\alpha_i$, $G_i$) de façon à estimer la valeur de $\alpha_0$ à l'origine ;
- utiliser $\alpha_0$ comme indicateur de la valeur de la rigidité longitudinale de sculpture.

Le coefficient d'adhérence (parfois aussi appelé coefficient de frottement) peut, dans le contexte de la présente invention, être obtenu de n'importe quelle manière appropriée, par exemple à partir de mesures faites dans le pneumatique ou son environnement. Lorsque l'invention est appliquée à des véhicules équipés d'un système de freinage ABS, on peut, sans que cela ne soit obligatoire, se baser sur une estimation du coefficient d'adhérence du genre de celle effectuée dans de tels systèmes, comme rappelé ci-après. Lors d'un freinage ligne droite sur un sol homogène, la force de freinage $F_X$ du pneu au sol est déterminée à partir de la pression de freinage et des paramètres de construction de la roue et de son frein. La connaissance de l'ensemble des forces $F_X$ appliquées par tous les pneus permet de calculer la décélération du véhicule, donc compte tenu des caractéristiques du véhicule le transfert de charge, donc les variations de charges sur chacune des roues. On peut en déduire une approximation de la charge verticale $F_Z$ appliquée sur chaque pneumatique. On obtient ainsi une estimation du coefficient d'adhérence $\mu = \frac{F_X}{F_Z}$ Si l'on connaît, par une estimation ou une mesure, l'effort latéral correspondant $F_y$, une estimation plus précise du coefficient d'adhérence est donnée par la formule

$$\mu = \frac{\sqrt{F_X{}^2\ F_Y{}^2}}{F_Z}.$$

Dans le contexte de la présente invention, on considérera ces deux estimations comme équivalentes. De même et ceci est bien clair pour l'homme du métier, dans le contexte de la présente invention, tout ce qui est exposé à propos du freinage reste valable en cas d'accélération ; autrement dit, un effort freineur est, quant au considérations relatives à l'adhérence, équivalent à un effort moteur, même si bien entendu, les actuateurs pour modifier ceux-ci ne sont pas les mêmes.

Quant au taux de glissement G du pneumatique, rappelons que G = 0% lorsqu'il n'y a pas de glissement entre la vitesse du pneumatique et la vitesse du véhicule, c'est à dire lorsque le pneu roule librement, et que G = 100% lorsque le pneu est bloqué en rotation pendant que la vitesse du véhicule est non nulle.

L'invention va être expliquée plus en détails dans la suite, à consulter avec les figures jointes dans lesquelles :

- la figure 1 est un bloc-diagramme représentant le procédé selon l'invention,
- la figure 2 est une courbe de variation du coefficient d'adhérence par rapport au glissement et la variation au même glissement de la sécante passant par l'origine et le point de la courbe précédente au même glissement,
- la figure 3 donne plusieurs relevés de variation du coefficient d'adhérence par rapport au glissement pour un même pneu dans différentes conditions d'essai,
- la figure 4 donne une courbe schématique typique de variation du coefficient d'adhérence par rapport au glissement et montre l'allure des sécantes passant par l'origine et la courbe pour trois glissements particuliers,
- la figure 5 donne une courbe schématique typique de variation linéaire en fonction du glissement de la pente de la sécante passant par l'origine et le point de la courbe de variation du coefficient d'adhérence au même glissement.

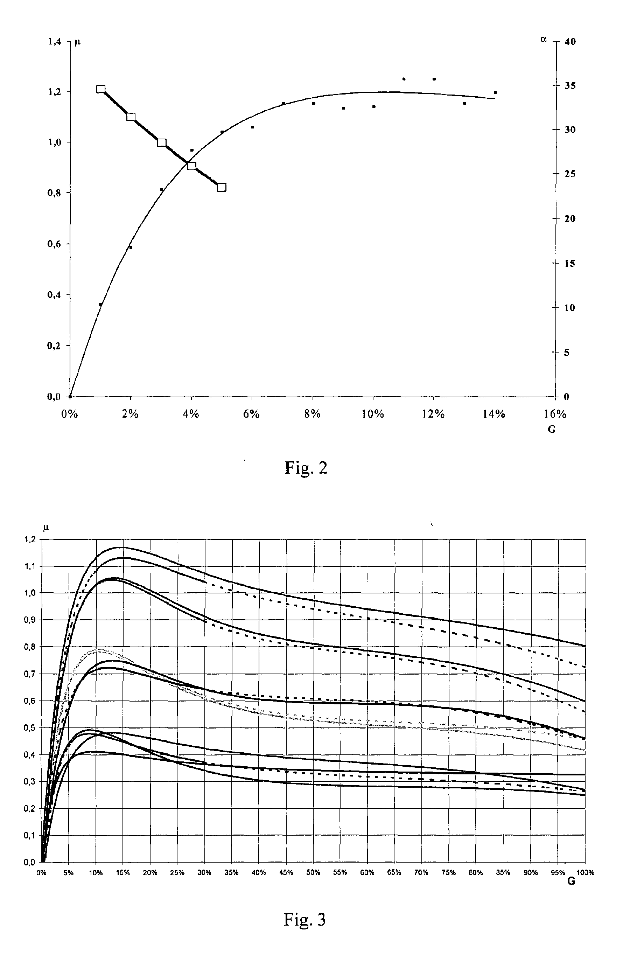

La présente invention est basée sur les observations suivantes. La figure 3 donne différentes courbes de

coefficient d'adhérence $\mu$ en fonction du glissement pour un même pneumatique MICHELIN XH1 195/65-15 neuf, mesuré à une condition de charge et de vitesse, sur différents sols, à une pression de gonflage de 2 bars. Typiquement, en fonction de l'environnement (nature du sol (asphalte, béton), sec ou mouillé (hauteur d'eau), température et niveau d'usure du pneumatique), la valeur de $\mu$ en fonction du glissement G peut varier énormément ($\mu_{max}$ vaut environ 0.15 sur de la glace et environ 1.2 sur un sol sec).

On exploite des mesures faites à chaque freinage (ou à chaque accélération), pendant l'évolution du coefficient d'adhérence vers une valeur maximale, en utilisant l'ensemble des informations disponibles pertinentes.

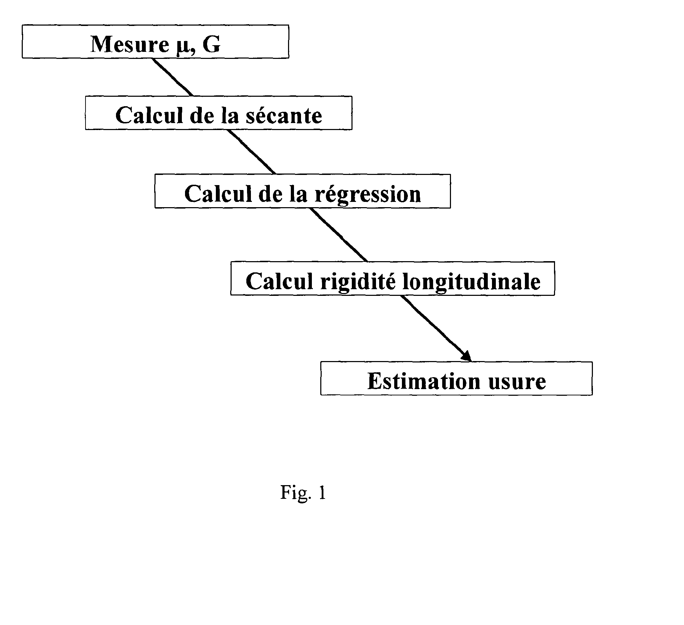

La figure 1 illustre l'algorithme proposé, dont les étapes principales sont les suivantes :

1. Acquisition des points ($G_i$, $\mu_i$), par mesure ou par estimation, selon les possibilités pratiques. Il convient d'acquérir au moins 2 points, c'est à dire deux paires « i » ($G_i$, $\mu_i$). On s'assure que le glissement $G_i$ est significativement non nul ; on peut imposer un seuil minimal de glissement pour éliminer des valeurs trop faibles pour être pertinentes.

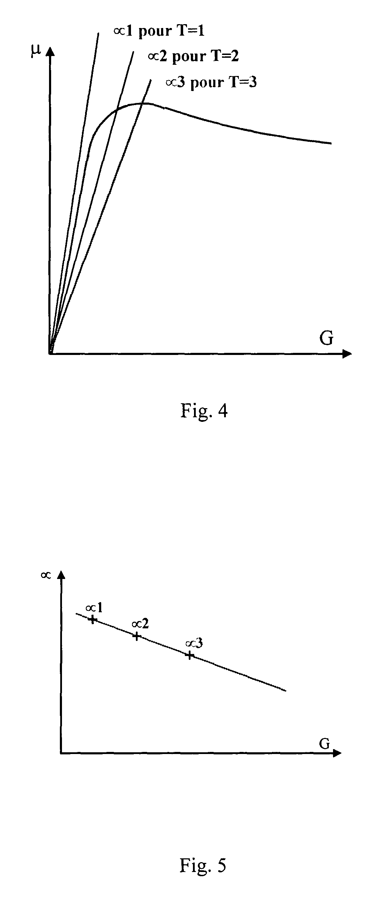

2. Calcul de l'angle $\alpha$ caractéristique de la sécante passant par l'origine et la courbe $\mu(G)$ : avec les valeurs ($G_i$, $\mu_i$) précédemment acquises, on évalue la valeur de la sécante, par un calcul direct $\alpha_i = \mu_i/G_i$, (voir figure 4) ou en procédant à une régression adaptée, par exemple linéaire :

$$\Sigma_{GG} = \sum G_j^2, \Sigma_{G\mu} = \sum G_j \cdot \mu_j, \alpha_i = \frac{\Sigma_{G\mu}}{\Sigma_{GG}} :$$

en considérant tous les points d'indice inférieur ou égal à i de façon à s'affranchir du bruit. En effet, la régression linéaire est par nature beaucoup moins sensible au bruit de mesure sur chaque point individuel, les perturbations ayant tendance à s'annuler si on considère un nombre de points suffisant (cfr. propriétés statistiques de base). Cette approche est particulièrement intéressante car, contrairement au passé, on ne s'intéresse pas aux valeurs individuelles (imprécises car bruitées) mais à des tendances se dégageant de plusieurs valeurs. On obtient donc les couples ($\alpha_i$, $G_i$).

3. Calcul d'un coefficient B par régression avec ($\alpha_i$, $G_i$) : on calcule une régression à partir d'un nombre « n » suffisant de points, le nombre de points permettant de rendre la méthode suffisamment indépendante du bruit :

- Cas d'une régression linéaire appliquée à n points de mesure ou d'estimation (voir figure 5) :

$$B^{Lin} = \frac{\sum \alpha \cdot \sum G^2 - \sum G \cdot \alpha \cdot \sum G}{n \cdot \sum G^2 - \left(\sum G\right)^2}$$

- Cas d'une régression exponentielle appliquée à n points de mesure ou d'estimation :

$$B^{Exp} = \frac{\sum Ln(\alpha) \cdot \sum G^2 - \sum G \cdot Ln(\alpha) \cdot \sum G}{n \cdot \sum G^2 - \left(\sum G\right)^2}$$

Par la régression la plus adaptée, on obtient donc le coefficient B. D'autres régressions que celles indiquées pourraient être adoptées. Les différentes régressions à envisager sont bien connues de l'homme du métier, qui saura obtenir le ou les coefficients de la régression choisie.

4. Calcul de la rigidité longitudinale : le coefficient B obtenu ci-dessus est représentatif de la rigidité longitudinale du pneumatique ;

- Cas d'une régression linéaire : Rigidité = $B^{Lin}$

- Cas d'une régression exponentielle : Rigidité = $e^{B^{Exp}}$

Notons que le coefficient B est égal à la valeur de l'angle caractéristique $\alpha$ pour un glissement nul ($\alpha_0$). On ne peut cependant pas le calculer directement, on l'obtient par une régression. On propose ici soit une régression linéaire, soit une régression exponentielle.

5. Estimation de l'usure. On procède au calcul d'une moyenne de $\alpha_0$, et on effectue une comparaison avec des valeurs de référence pour le pneumatique considéré, afin d'estimer le taux d'usure du pneumatique. Par exemple, partant d'une sculpture standard ayant une hauteur initiale $H_0 = 8$mm, ayant enregistré une rigidité standard « Rigidité$_0$ » à l'état neuf, et enregistrant une remise à zéro actionnée à chaque remplacement de pneus, on obtient une estimation H de la hauteur résiduelle de sculpture pour les pneus en usage par une règle de trois, par exemple (à défaut d'un modèle plus sophistiqué) :

$$H = H_0 \cdot \frac{Rigidité}{Rigidité_0}.$$

Bien entendu, on peut enrichir le calcul de H ou de $\alpha_0$ en moyennant le résultat obtenu sur plusieurs freinages (ou plusieurs phases d'efforts moteur, ce qui est équivalent comme on l'a déjà précisé) ou sur une distance prédéterminée. Cela rend le résultat plus fiable.

L'invention permet d'obtenir un bonne approximation de la rigidité longitudinale du pneumatique. Or celle-ci comporte deux composantes : la composante structurelle provenant de la carcasse du pneu, et la composante de "sculpture" de la bande de roulement. La composante structurelle reste constante au cours de la vie du pneumatique. En revanche, la composante de "sculpture" varie au fur et à mesure de l'usure. Il y a une augmentation de la rigidité sensiblement proportionnellement à l'usure. D'où l'estimation de l'usure des pneumatiques proposée par l'invention.

En moyennant ledit indicateur de la valeur résiduelle H sur une période de temps suffisante, pour s'affranchir de l'influence des différents sols sur lesquels roule le pneumatique, et en comparant avec des valeurs de référence pour le pneumatique considéré, on peut obtenir une estimation fiable de l'usure du pneumatique.

## Revendications

1. Méthode de contrôle du fonctionnement d'un pneumatique, comprenant les étapes suivantes:

   - déterminer des estimations ou des mesures du glissement $G_i$ et du coefficient d'adhérence $\mu_i$ existant audit glissement, pour au moins une paire « i » de valeurs ($G_i$, $\mu_i$);
   - déterminer les valeurs correspondantes de la pente $\alpha_i$, de la droite passant par l'origine et par ($G_i$, $\mu_i$)
   - calculer un coefficient B par calcul direct ou par une régression à partir d'un nombre suffisant de paires avec ($\alpha_i$, $G_i$) de façon à estimer la valeur de $\alpha_0$ à l'origine ;
   - utiliser $\alpha_0$ dans un indicateur de la valeur de la rigidité longitudinale de sculpture.

2. Méthode de contrôle du fonctionnement d'un pneumatique selon la revendication 1, dans laquelle la détermination de la pente $\alpha_i$, se fait par calcul direct $\alpha_i = \mu_i / G_i$.

3. Méthode de contrôle du fonctionnement d'un pneumatique selon la revendication 1, dans laquelle la détermination de la pente $\alpha_i$, se fait en procédant à une régression adaptée.

4. Méthode de contrôle du fonctionnement d'un pneumatique selon la revendication 1, dans laquelle on procède à une régression linéaire :

$$\Sigma_{GG} = \sum G_j^2, \dot{\Sigma}_{G\mu} = \sum G_j \cdot \mu_j, \alpha_i = \frac{\Sigma_{G\mu}}{\Sigma_{GG}}$$

5. Méthode de contrôle du fonctionnement d'un pneumatique selon la revendication 1, dans laquelle le coefficient B, représentatif de la rigidité longitudinale du pneumatique, est calculé par la régression linéaire suivante, appliquée à n points de mesure ou d'estimation :

$$B^{Lin} = \frac{\sum \alpha \cdot \sum G^2 - \sum G \cdot \alpha \cdot \sum G}{n \cdot \sum G^2 - \left(\sum G\right)^2}$$

6. Méthode de contrôle du fonctionnement d'un pneumatique selon la revendication 1, dans laquelle le coefficient B, représentatif de la rigidité longitudinale du pneumatique, est calculé par la régression exponentielle suivante, appliquée à n points de mesure ou d'estimation :

$$B^{Exp} = \frac{\sum Ln(\alpha) \cdot \sum G^2 - \sum G \cdot Ln(\alpha) \cdot \sum G}{n \cdot \sum G^2 - \left(\sum G\right)^2}$$

7. Méthode de contrôle du fonctionnement d'un pneumatique selon l'une des revendications 1 à 6, dans laquelle on procède à une moyenne de $\alpha_0$, et on effectue une comparaison avec des valeurs de référence pour le pneumatique considéré, afin d'estimer le du taux d'usure du pneumatique.

8. Méthode de contrôle du fonctionnement d'un pneumatique selon la revendication 7, dans laquelle on estime la hauteur résiduelle de sculpture du pneumatique de la façon suivante :

$$H = H_0 \cdot \frac{Rigidit\acute{e}}{Rigidit\acute{e}_0}$$

9. Méthode de contrôle du fonctionnement d'un pneumatique selon la revendication 7 ou 8, dans laquelle on procède à une moyenne de $\alpha_0$ sur un nombre de freinage ou d'accélération prédéterminé.

10. Méthode de contrôle du fonctionnement d'un pneumatique selon la revendication 7 ou 8, dans laquelle on procède à une moyenne de $\alpha_0$ sur une distance prédéterminée.

Fig. 1

Fig. 2

Fig. 3

∝1 pour T=1

∝2 pour T=2

∝3 pour T=3

μ

G

Fig. 4

∝

∝1

∝2

∝3

G

Fig. 5

**Office européen des brevets**

## RAPPORT DE RECHERCHE EUROPEENNE

Numéro de la demande

EP 03 01 4801

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | FR 2 816 402 A (CONTINENTAL TEVES AG & CO OHG) 10 mai 2002 (2002-05-10) * revendications; figures 1,2 * --- | 1 | B60C11/24 B60T8/00 G01N3/56 G01N19/02 |
| A | DE 101 56 823 A (TOYOTA MOTOR CO LTD) 6 juin 2002 (2002-06-06) --- | | |
| A | US 2002/010537 A1 (WATANABE YOSHITOSHI ET AL) 24 janvier 2002 (2002-01-24) --- | | |
| A | US 6 015 192 A (FUKUMURA TOMOHIRO) 18 janvier 2000 (2000-01-18) ----- | | |

**DOMAINES TECHNIQUES RECHERCHES (Int.Cl.7)**

B60C
B60T
G01N

Le présent rapport a été établi pour toutes les revendications

| Lieu de la recherche | Date d'achèvement de la recherche | Examinateur |
|---|---|---|
| LA HAYE | 14 octobre 2003 | Baradat, J-L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)

## ANNEXE AU RAPPORT DE RECHERCHE EUROPEENNE
## RELATIF A LA DEMANDE DE BREVET EUROPEEN NO.

EP 03 01 4801

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-10-2003

| Document brevet cité au rapport de recherche | | Date de publication | Membre(s) de la famille de brevet(s) | | Date de publication |
|---|---|---|---|---|---|
| FR 2816402 | A | 10-05-2002 | DE | 10058099 A1 | 23-05-2002 |
| | | | FR | 2816402 A1 | 10-05-2002 |
| DE 10156823 | A | 06-06-2002 | JP | 2002154418 A | 28-05-2002 |
| | | | DE | 10156823 A1 | 06-06-2002 |
| | | | US | 2002111752 A1 | 15-08-2002 |
| US 2002010537 | A1 | 24-01-2002 | JP | 2001287518 A | 16-10-2001 |
| US 6015192 | A | 18-01-2000 | JP | 10035443 A | 10-02-1998 |

EPO FORM P0460

Pour tout renseignement concernant cette annexe : voir Journal Officiel de l'Office européen des brevets, No.12/82